# EUROPEAN PATENT APPLICATION

(11) **EP 1 538 039 A1**
(43) Date of publication of application: **08.06.2005**
(21) Application number: 04025296.7
(22) Date of filing: 25.10.2004
(51) Int. Cl.: B60T 8/00, B60K 28/16, B60T 8/32, B60K 23/08

(54) **Combination braking and traction control system for a motor vehicle**

(30) Priority: 01.12.2003 US 725254
(71) Applicant: New Venture Gear, Inc., Troy, Michigan 48083 (US)
(72) Inventor: Zalewski, John D., Liverpool New York 13090 (US); Brissenden, James S., Baldwinsville New York 13027 (US); Ronk, Aaron M., Lake George New York 12845 (US)
(74) Representative: Balsters, Robert

(57) **Abstract**

An anti-lock braking and traction control system includes a sources of pressurized fluid (56,58,60), an actuator (54) adapted to selectively supply the pressurized fluid to wheel brakes (46,48,50,52) and a clutch (66,68,70). A controller (64) communicates with the actuator (54) to control the duration of magnitude of pressure supplied to the wheel brakes (46,48,50,52) and the clutch (66,68,70).

## Description

### FIELD OF THE INVENTION

The present invention relates generally to hydraulic systems for vehicles and, more particularly, to a combination braking and traction control system adapted for use in motor vehicle driveline applications.

### BACKGROUND OF THE INVENTION

In view of an increased demand for vehicles having anti-lock braking systems and traction control systems, many controls are currently being incorporated in vehicular driveline applications for transferring braking torque and/or drive torque to the wheels. A modern trend in vehicle design includes equipping a driveline with a transfer case having an electronically controlled transfer clutch. The transfer clutch is operable to automatically direct drive torque to the primary and/or secondary drivelines without any input or action on the part of the vehicle operator. The transfer clutch is typically actuated by a power-operated clutch actuator which responds to control signals sent from a traction control module. The control signals are typically based on current operating conditions of the vehicle (i.e., vehicle speed, interaxle speed difference, acceleration, steering angle, etc.) as detected by various sensors. For example, if traction is lost at the primary wheels, the transfer clutch can be engaged to establish an "on-demand" four-wheel drive mode. Thus, such "on-demand" transfer cases can utilize adaptive control schemes for automatically controlling torque distribution during all types of driving and road conditions.

To assure vehicle stability is maintained during braking, many vehicles are also now equipped with an anti-lock braking system. The anti-lock braking system includes a hydraulic pressure source which supplies pressurized fluid to hydraulically-powered brake actuators for actuating the brakes located at each wheel end. The anti-lock braking system typically uses some or all of the sensor signals to control operation of the brake actuators. Specifically; a brake control mode receives sensor signals and functions to control coordinated actuation of the brakes. Typically, little to no interaction occurs between the control modules for the anti-lock braking system and the traction control system. However, some systems provide minimal communication to disable the traction control system so as to assure that the vehicle is not placed in a four-wheel drive mode when the anti-lock braking system is functioning.

While the present anti-lock braking systems and traction control systems have operated sufficiently in the past, a need exists to reduce the complexity and cost of implementing such systems on a motor vehicle. For example, the size, weight and electrical power requirements of electrical motors needed to provide the described clutch engagement loads may make such systems cost prohibitive.

### SUMMARY OF THE INVENTION

Thus, it is an object of the present invention to provide a combination braking and traction control system having a source of pressurized fluid and an actuator adapted to selectively supply pressurized fluid to the vehicle wheel brakes and at least one transfer clutch. The transfer clutch is operable to selectively transfer drive torque from a first rotary member to a second rotary member. The anti-lock braking and traction control system also includes a controller in communication with the actuator to control the duration and magnitude of fluid pressure supplied to the wheel brakes and the transfer clutch.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a schematic illustration of a vehicle equipped with a combination braking and traction control system of the present invention;

Figure 2 is a schematic illustration of a brake and AWD system of the present invention;

Figure 3 is a cross-sectional side view of an exemplary transfer case selectively operable by the braking and traction control system of the present invention; and

Figure 4 is a schematic illustration of a vehicle equipped with an alternate braking and traction control system.

### DETAILED DESCRIPTION OF THE PREFERRED EMBODIMENTS

The present invention is directed to a combination braking and traction control system for adaptively controlling the brakes of the vehicle as well as a mechanism that modulates the torque transferred from a first rotary member to a second rotary member. The torque transfer mechanism finds particular application in power transmission devices for use in motor vehicle drivelines such as, for example, an on-demand clutch in a transfer case or in-line torque coupling, a biasing clutch associated with a differential assembly in a transfer case or a drive axle assembly, or as a shift clutch in a multi-speed automatic transmission. Thus, while the present invention is hereinafter described in association with particular arrangements for use in specific driveline applications, it will be understood that the arrangements shown and described are merely intended to illustrate embodiments of the present invention.

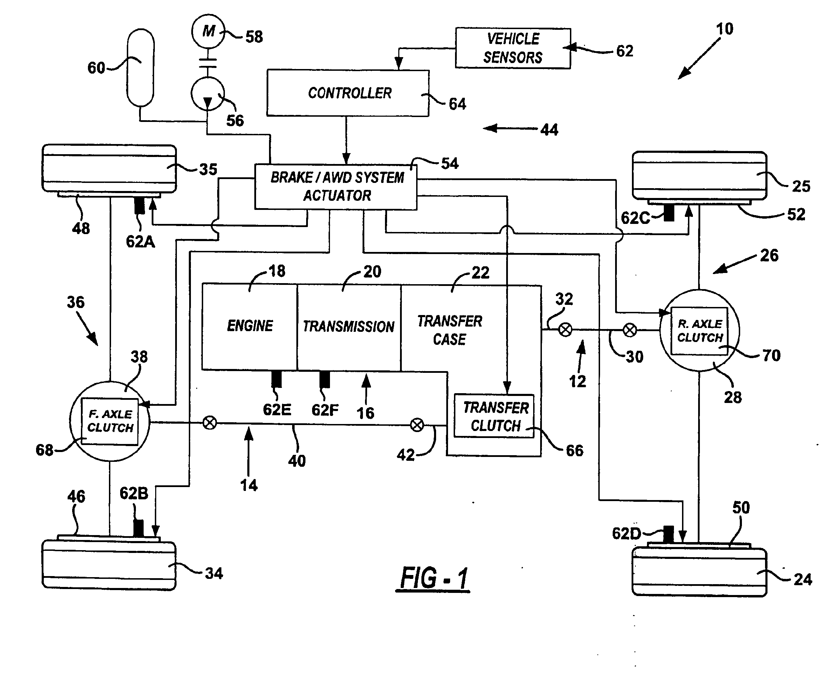

With particular reference to Figure 1 of the drawings, a drivetrain 10 for a four-wheel drive vehicle is shown. Drivetrain 10 includes a primary driveline 12, a secondary driveline 14, and a powertrain 16 for delivering rotary tractive power (i.e., drive torque) to the drivelines. In the particular arrangement shown, primary driveline 12 is the rear driveline while secondary driveline 14 is the front driveline. Powertrain 16 includes an engine 18, a multi-speed transmission 20, and a power transmission device, hereinafter referred to as transfer case 22. Rear driveline 12 includes a pair of rear wheels 24 and 25 connected at opposite ends of a rear axle assembly 26 having a rear differential 28 coupled to one end of a rear prop shaft 30, the opposite end of which is coupled to a rear output shaft 32 of transfer case 22. Likewise, front driveline 14 includes a pair of front wheels 34 and 35 connected at opposite ends of a front axle assembly 36 having a front differential 38 coupled to one end of a front prop shaft 40, the opposite end of which is coupled to a front output shaft 42 of transfer case 22.

With continued reference to the drawings, drivetrain 10 is shown to further include an electronically-controlled brake and all wheel drive (AWD) system 44 for providing anti-locking braking functions as well as traction control functions. In this regard, driveline 10 is equipped with a pair of front brakes 46 and 48 for decelerating front wheels 34 and 35 as well as a pair of rear brakes 50 and 52 for decelerating rear wheels 24 and 25. Each brake includes a hydraulically-powered brake operator for applying the brakes. Additionally, brake and AWD system 44 includes one or more clutches that may be selectively actuated for transferring drive torque from engine 18 to one or more of the wheels. In one example, a transfer clutch 66 is positioned within transfer case 22 and may be selectively operated to transfer drive torque from rear output shaft 32 to front output shaft 42 for establishing part-time and on-demand four-wheel drive modes. Furthermore, front axle assembly 36 may be equipped with a front axle biasing clutch 68 for selectively varying the torque distribution delivered from front prop shaft 40 to front wheels 34 and 35. Similarly, rear axle assembly 26 may include a rear aXle biasing clutch 70 for selectively varying the torque distribution delivered from rear prop shaft 30 to rear wheels 24 and 25. It should be appreciated that a vehicle may be equipped with one or more of these torque transfer clutches without departing from the scope of the present invention. Preferably, each of these torque transfer clutches includes at least one multi-plate friction clutch assembly and, as will be detailed, a hydraulically-powered actuator for controlling engagement of the friction clutch assemblies.

Brake and AWD system 44 preferably includes a common brake/AWD system actuator assembly 54. Pressurized hydraulic fluid is selectively supplied to each of the brake operators and/or the clutches by actuator assembly 54. In operation, a hydraulic pump 56 is driven by a motor 58 to supply fluid to actuator assembly 54 and an accumulator 60. Accumulator 60 stores pressurized fluid for use during peak demand situations. In addition vehicle sensors 62 detect certain dynamic and operational characteristics of the motor vehicle. Finally, a controller 64 controls the operation of components associated with actuator assembly 54 in response to signals provided by vehicle sensors 62.

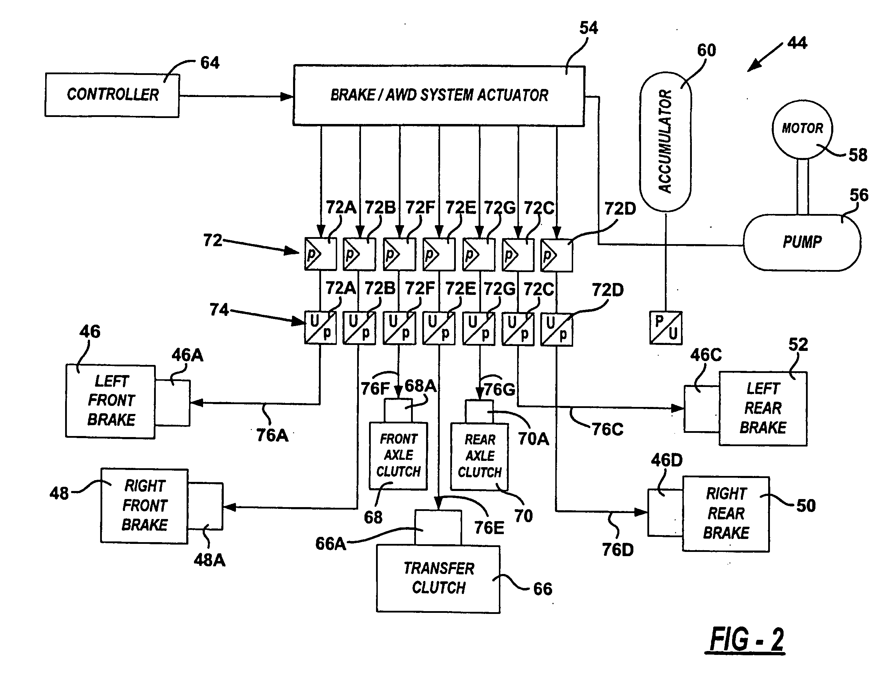

With reference to Figure 2, brake and AWD system actuator assembly 54 is shown to include a plurality of electro-hydraulic pressure modulators 72 that are each plumbed in fluid communication with pump 56 and accumulator 60. Actuator assembly 54 also includes a plurality of pressure sensors 74. Each pressure sensor 74 provides a signal to controller 64 that is indicative of the fluid pressure being supplied to the particular brake and/or clutch. Each brake and clutch may be individually controlled based on the current vehicle characteristics.

In the example depicted in Figure 2, a first fluid passageway 76A interconnects the hydraulic brake operator 46A associated with left front brake 46 to the high pressure fluid generated by pump 56. A first pressure modulator 72A is operable to controllably vary the fluid pressure supplied to brake operator 46A for controlling engagement of left front brake 46. Likewise, pressure sensor 74A provides a signal to controller 64 that is indicative of the fluid pressure within passageway 76A. Controller 64 is in communication with pressure modulator 78 and functions to controllably vary the fluid pressure within passageway 76A. Preferably, first pressure modulator 72A is an electro-hydraulic control valve capable of controlling the fluid pressure delivered to brake operator 46A based on the value of an electric command signal generated by controller 64.

Similarly, a second fluid passageway 76B interconnects brake operator 48A associated with right front brake 48 to the high fluid pressure generated by pump 56. A second electro-hydraulic pressure modulator 72B provides metered pressurized fluid to hydraulic brake operator 46B for controlling engagement of right front brake 48. A pressure sensor 74B outputs a signal indicative of the fluid pressure within passageway 78 to controller 64. With continued reference to Figure 2, a third passageway 76C and a fourth passageway 76D provide fluid communication between pump 56 and respective left and right rear brake operators 46C and 46D. Third and fourth electro-hydraulic pressure modulators 72C and 72D are provided to control the fluid pressure supplied to brake operators 46C and 46D, respectively. As seen, pressure sensors 74C and 74D are provided downstream of pressure modulators 72C and 72D to provide pressure signals to controller 64. Finally, fifth passageway 76E, sixth passageway 76F and seventh passageway 76G provide fluid communication between pump 56 and corresponding ones of clutch operators 66A, 68A and 70A associated with transfer clutch 66 and axle biasing clutches 68 and 70, respectively. Corresponding electro-hydraulic pressure modulators 72E, 72F ad 72G and pressure sensors 74E, 74F and 74G are provided in these passageways. Variable control of the hydraulic pressure supplied to each of the clutch operators function to control variable or "adaptive" engagement of each clutch.

The brake/AWD system depicted in Figure 2 provides the greatest amount of vehicle control because each brake or clutch is equipped with a pressure modulator and sensor. One skilled in the art will appreciate that a simplified system having a reduced number of pressure modulators and sensors is also contemplated as being within the scope of the present invention. Specifically, left front brake 46 and right front brake 48 may be controlled with a single pressure modulator and pressure sensor.

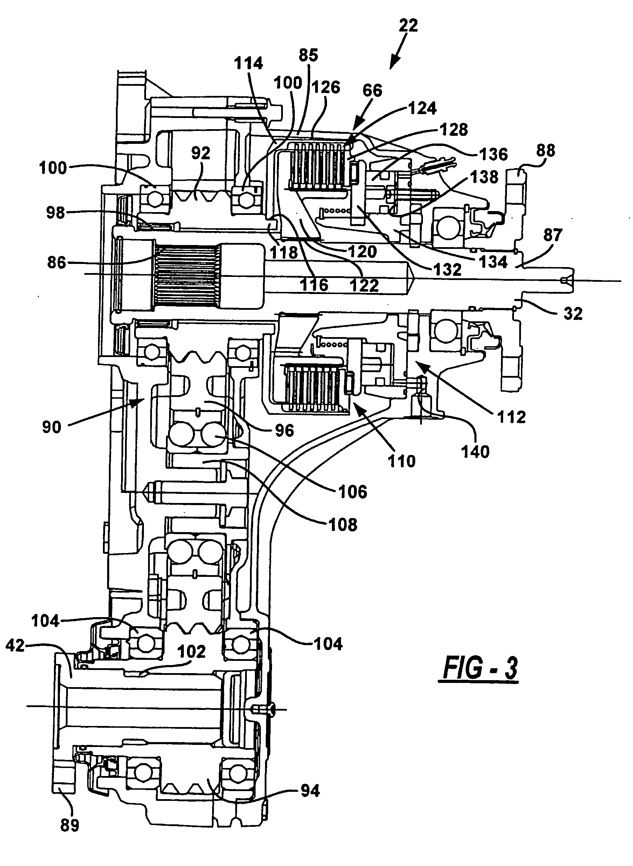

Figure 3 depicts an exemplary transfer case 22 equipped with transfer clutch 66. Transfer case 22 is shown to include a multi-piece housing 85 from which rear output shaft 32 is rotatably supported. Rear output shaft 32 includes an internally-splined first end segment 86 adapted for connection to the output shaft of transmission 20 and a second end segment 87 to which a yoke 88 is secured for connection to rear prop shaft 30. Front output shaft 42 is likewise rotatably supported in housing 85 and includes an integral yoke segment 89 adapted for connection to front prop shaft 40.

Transfer clutch 66 is operably arranged to transfer rotary power (i.e., drive torque) from rear output shaft 32 to front output shaft 42 through a transfer assembly 90. Transfer assembly 90 includes a first gear 92, a second gear 94, and a third gear 96 that is in meshed engagement with first gear 92 and second gear 94. First gear 92 is shown to be rotatably supported on rear output shaft 32 via a bearing assembly 98 and likewise be rotatably supported from housing 85 via a pair of laterally spaced bearing assemblies 100. Second gear 94 is coupled via a spline connection 102 to front output shaft 42 and is rotatably supported from housing 85 by a pair of laterally spaced bearing assemblies 104. Finally, third gear 96 is rotatably supported by bearing assemblies 106 on a stub shaft 108 that is non-rotatably secured to housing 85. It is contemplated that geared transfer assembly 90 could be replaced with a well-known chain and sprocket type transfer system if desired.

Transfer clutch 66 includes a multi-plate friction clutch assembly 110 and clutch operator 66A, hereinafter referred to as clutch actuator assembly 112. Clutch assembly 110 is shown to include a clutch drum 114 fixed via a spline connection 116 to a tubular segment 118 of first gear 92, a clutch hub 120 fixed via a spline connection 122 to rear output shaft 32, and a multi-plate clutch pack 124 operably disposed between drum 114 and hub 120. Clutch pack 124 includes a set of outer clutch plates that are splined for rotation with and axial movement on an outer cylindrical rim segment 126 of drum 114. Clutch pack 124 also includes a set of inner clutch plates that are splined for rotation with and axial movement on clutch hub 120. Clutch assembly 110 further includes an apply plate 128 splined for rotation with rim segment 126 of drum 114, and a pressure plate 132 splined to a fixed support 134. A thrust bearing 135 is provided between apply plate 128 and pressure plate 132 to accommodate relative rotation therebetween during concurrent axial movement. Clutch actuator assembly 112 includes a piston 136 positioned within a pressure chamber 138 formed in support 134. A passageway 140 extends through support 134 and housing 85 to allow pressurized fluid supplied from pressure modulator 72E to enter chamber 138 and act on piston 136. Apply plate 128 is arranged to exert a compressive clutch engagement force on clutch pack 124 in response to translational movement of pressure plate 132 and piston 136.

Apply plate 128 is axially moveable relative to clutch pack 124 between a first or "released' position and a second or 'locked" position. With apply plate 128 in its released position, a minimum clutch engagement force is exerted on clutch pack 124 such that virtually no drive torque is transferred from rear output shaft 32 through clutch assembly 110 and transfer assembly 90 to front output shaft 42 so as to establish the two-wheel drive mode. In contrast, location of apply plate 128 in its locked position causes a maximum clutch engagement force to be applied to clutch pack 124 such that front output shaft 42 is, in effect, coupled for common rotation with rear output shaft 32 so as to establish the part-time four-wheel drive mode. Therefore, accurate control of the position of apply plate 128 between its released and locked positions permits adaptive regulation of the amount of drive torque transferred from rear output shaft 32 to front output shaft 42, thereby establishing the on-demand four-wheel drive mode.

Figure 1 illustrates vehicle sensors 62 grouped together in a block format. However, it is contemplated that the sensors required for controlling the combination brake and traction control system includes individual wheel speed sensors 62A through 62D, engine speed sensor 62E and transmission gear sensor 62F. Obviously, such sensors are used in virtually all conventional vehicles such that the present invention can be easily incorporated into vehicles utilizing an ABS arrangement.

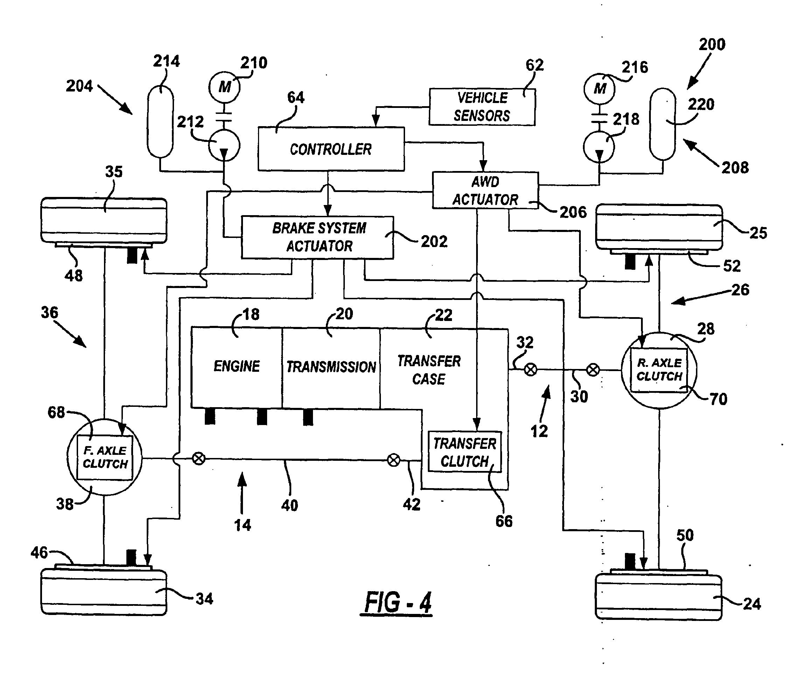

Figure 4 depicts an alternate embodiment brake and AWD system 200. System 200 is substantially similar to system 44 except that system 200 includes a brake system actuator 202 that is plumbed to a brake supply circuit 204 and an AWD actuator 206 that is plumbed to a separate AWD supply circuit 208. Due to the substantial similarity between brake and AWD system 44 and system 200, common elements will retain their previously introduced reference numerals.

One skilled in the art will appreciate that brake system actuator 202 and AWD actuator 206 are both controlled by controller 64. Preferably, controller 64 is the main vehicle controller. However, controller 64 may be separate from and in addition to a main vehicle controller.

Brake supply circuit 204 includes a motor 210 drive a pump 212. The output from pump 212 supplies an accumulator 214 and brake system actuator 202. Accumulator 214 functions to provide pressurized fluid to brake system actuator 202 if pump 212 is unable to provide the requested demand. Brake system actuator 202 is substantially similar to the brake and AWD actuator previously described. As such, brake system actuator 202 selectively supplies pressurized fluid to each of the hydraulically-powered brake operators to control engagement of the wheel brakes based on signals provided by controller 64.

AWD supply circuit 208 includes a motor 216 driving a pump 218. The output from pump 218 supplies an accumulator 220 as well as AWD actuator 206. AWD actuator 206 selectively provides pressurized fluid to transfer clutch 66, front axle clutch 68 and/or rear axle clutch 70. As previously mentioned, the number and location of clutches implemented within the vehicle at Figure 4 is merely exemplary and that virtually any number of clutches may be selectively controlled by AWD actuator 206.

Based on the description of brake and AWD system 200 previously provided, one skilled in the art will appreciate that brake system actuator 202 and AWD actuator 206 may be controlled to operate simultaneously, alternately or entirely independently from one another. Separate supply circuits 204 and 208 provide further support for independent control of brake system actuator 202 and AWD actuator 206. However, a single supply circuit may be used to provide fluid to both brake system actuator 202 and AWD actuator 206 without departing from the scope of the present invention. Depending on the volume requirements of brake system actuator and AWD actuator 206, it may be more efficient to construct a single slightly larger supply circuit than two individual smaller supply circuits.

Furthermore, the foregoing discussion discloses and describes merely exemplary embodiments of the present invention. One skilled in the art will readily recognize from such discussion, and from the accompanying drawings and claims, that various changes, modifications and variations may be made therein without department from the spirit and scope of the invention as defined in the following claims.

## Claims

1. An anti-lock braking and traction control system for a vehicle having wheel brakes and a clutch, the clutch selectively transferring drive torque from a first shaft to a second shaft, the system comprising:
a source of pressurized fluid;
an actuator adapted to selectively supply said pressurized fluid from said source to the wheel brakes and the clutch; and
a controller in communication with said actuator to control the duration and magnitude of pressure supplied to the wheel brakes and clutch.

2. The anti-lock braking and traction control system of claim 1 wherein said actuator includes a plurality of pressure modulators operable to regulate the pressure of the fluid supplied to the wheel brakes and the clutch.

3. The anti-lock braking and traction control system of claim 2 wherein said actuator includes a pressure sensor operable to provide a signal indicative of the fluid pressure exiting one of said plurality of pressure modulators.

4. The anti-lock braking and traction control system of claim 3 wherein said clutch is operable to selectively drivingly couple a first shaft to a second shaft.

5. The anti-lock braking and traction control system of claim 4 wherein said clutch is a transfer clutch in a transfer case and said second shaft is drivingly coupled to a set of wheels.

6. The anti-lock braking and traction control system of claim 5 further including vehicle sensors being operable to provide signals to said controller indicative of vehicle operating conditions.

7. The anti-lock braking and traction control system of claim 3 wherein said pressure sensor is in communication with said controller, said controller being operable to control said pressure modulators to provide a target pressure based on feedback from said pressure sensor.

8. A vehicle comprising:
an engine;
a primary driveline coupled to said engine and having a pair of rear wheels, each rear wheel being coupled to a rear wheel brake;
a secondary driveline having a pair of front wheels, each front wheel being coupled to a front wheel brake;
a clutch operable for selectively drivingly interconnecting said engine to said secondary driveline;
an actuator operable to selectively supply pressurized fluid to each of said front wheel brakes, said rear wheel brakes and said clutch to apply said brakes and said clutch; and
a controller operable to signal said actuator to supply a predetermined pressure to at least one of said brakes and said clutch.

9. The vehicle of claim 8 wherein said actuator includes a plurality of pressure modulators and a plurality of pressure sensors, said pressure sensors being operable to provide said controller signals indicative of the pressure provided by said pressure modulators.

10. The vehicle of claim 9 wherein one of said pressure modulators is operable to vary the pressure of fluid supplied to said clutch.

11. The vehicle of claim 10 further including a pump and an accumulator plumbed to supply said actuator, said accumulator operable to store a volume of pressured fluid.

12. The vehicle of claim 8 wherein said controller also controls said vehicle engine.

13. The vehicle of claim 8 further including a plurality of vehicle sensors operable to provide signals to said controller indicative of vehicle operating conditions.

14. The vehicle of claim 8 wherein said actuator is operable to simultaneously provide pressurized fluid to each of said wheel brakes and said clutch.

15. The vehicle of claim 8 further including second and third clutches, said actuator being operable to supply pressurized fluid to said second and third clutches.

16. The vehicle of claim 15 wherein said second clutch is mounted in a drive axle assembly and operable to modulate torque supplied to one of said pair of front and rear wheels.

17. A method of controlling the stability characteristics of a vehicle having a controller in communication with an actuator, a primary driveline with a first set of wheels and brakes as well as a secondary driveline with a second set of wheels and brakes, the vehicle having a power transfer mechanism with a clutch for selectively drivingly interconnecting the primary and secondary drivelines, the method comprising:
determining if one or more of the brakes and the clutch should be actuated to maintain vehicle stability;
determining a fluid pressure to be supplied to the brakes and the clutch;
supplying pressurized fluid to the brakes and clutch to be actuated;
providing a signal to the controller indicative of the pressure being supplied to the brakes and the clutch; and
modulating the pressure supplied to provide the desired pressure.

18. The method of claim 17 further including determining the pressure supplied to each brake and clutch.

19. The method of claim 17 further including simultaneously supplying pressurized fluid to at least one brake and one clutch.

20. The method of claim 19 further including pumping fluid to the actuator and storing pressurized fluid in an accumulator.

21. The method of claim 17 further including controlling the pressure for actuating the brakes with a second actuator separate from the actuator used to control the pressure for actuating the clutch.

22. The method of claim 17 further including supplying fluid for actuating the brakes from a first source and supplying the fluid for actuating the clutch from a second source.
